# EUROPÄISCHE PATENTSCHRIFT

(11) **EP 3 122 586 B1**
(45) Veröffentlichungstag und Bekanntmachung des Hinweises auf die Patenterteilung: **06.06.2018**
(21) Anmeldenummer: 15709093.7
(22) Anmeldetag: 28.02.2015
(51) Int. Cl.: B60K 17/00, B62D 21/00, B62D 21/15, B60G 7/02

(54) **HINTERACHSTRÄGERLOSES KRAFTFAHRZEUG**
MOTOR VEHICLE WITHOUT A REAR AXLE CARRIER
VÉHICULE AUTOMOBILE SANS SUPPORT D'ESSIEU ARRIÈRE

(30) Priorität: 22.03.2014 DE 102014004164
(43) Veröffentlichungstag der Anmeldung: 01.02.2017
(73) Patentinhaber: Audi AG, 85045 Ingolstadt (DE)
(72) Erfinder: RUGIES, Stefan, 85055 Ingolstadt (DE); MOHRLOCK, Dominik, 85114 Buxheim (DE); WIED, Karsten, 57290 Neunkirchen (DE)
(74) Vertreter: Reichert, Thomas Klaus
(86) Internationale Anmeldenummer: PCT/EP2015/000470
(87) Internationale Veröffentlichungsnummer: WO 2015/144285

(56) Entgegenhaltungen:
- EP-A1- 0 812 719
- DE-A1- 10 041 583
- DE-A1-102005 043 633
- DE-A1-102006 040 837
- DE-A1-102013 200 291
- DE-C- 875 442
- JP-A- H07 228 163
- JP-A- 2000 272 535
- JP-A- 2008 120 390

## Beschreibung

Die Erfindung betrifft ein hinterachsträgerloses Kraftfahrzeug mit einem Hinterachsgetriebe, insbesondere einem Differentialgetriebe, insbesondere eine Aufhängung für ein solches Hinterachsgetriebe an einer Karosserie eines hinterachsträgerlosen Kraftfahrzeuges.

Üblicherweise besitzen Personenkraftwagen zur Aufnahme radführender Bauteile, wie zum Beispiel Lenker, Spurstangen und dergleichen einen sogenannten Hinterachsträger, welcher über Schwingungsentkopplungselemente lösbar mit einer Fahrzeugkarosserie in deren Heckbereich verschraubt ist. Handelt es sich bei einem solchen Fahrzeug um ein Kraftfahrzeug, dessen Hinterachse eine angetriebene Achse ist, so ist das hierfür notwendige Hinterachsgetriebe (Differentialgetriebe) üblicherweise am Hinterachsträger befestigt und wird zusammen mit dem Hinterachsträger in das Fahrzeug eingebracht oder an diesem montiert.

Aus der DE 10 2011 002 700 A1 ist eine Lagerung eins Achsgetriebes im Heckbereich eines Personenkraftwagens bekannt geworden, bei dem das Hinterachsgetriebe einerseits am Hinterachsträger befestigt ist und andererseits an Lagerböcken, die mit der Kraftfahrzeugkarosserie verbunden sind, aufgehängt ist. Nachteilig bei einer derartigen Aufhängung des Hinterachsgetriebes ist, dass bis zur Befestigung des Hinterachsträgers und des Hinterachsgetriebes an der Karosserie das Hinterachsgetriebe bezüglich des Hinterachsträgers undefiniert befestigt ist und somit während der Fahrzeugmontage einen erhöhten Führungsaufwand erfordert, bis die karosserieseitigen Befestigungspunkte gesetzt sind. Dies erschwert eine Vormontage des Hinterachsgetriebes bezüglich des Hinterachsträgers.

Aus der DE 10 2007 039 574 A1 ist eine Vorrichtung zur Lagerung eines Getriebeaggregates bekannt geworden, bei dem das Achsgetriebe mittels schwingungsentkoppelter Lagerungen an einem Fahrschemel befestigt ist. Ein Fahrschemel ist lediglich ein Synonym für einen Achsträger. Somit handelt es sich bei einer derartigen Aufhängung eines Getriebeaggregats um eine Lagerung des Getriebeaggregats bezüglich eines Hinterachsträgers.
Aus der geltungsbildenden DE 10 2006 040 837 A1 ist eine Getriebeaufhängung eines Hinterachsgetriebes bei einem hinterachsträgerlosen Kraftfahrzeug bekannt. Bei einem solchen Fahrzeug sind radführende Bauteile (Lenker) ohne Zwischenschaltung eines sogenannten Hinterachsträgers direkt an der Karosseriestruktur aufgehängt. Das Hinterachsgetriebe ist an Querträgern befestigt, wobei die Querträger den rechten und den linken Längsträger der Karosseriestruktur verbinden. Die vorgeschlagene Anbindung des Hinterachsgetriebes an karosserierohbauseitig vorgesehene Querträger zwischen den hinteren Längsträgern erfordert ein erhebliches Maß an Konstruktionsaufwand und an Materialaufwand, um eine akustisch optimierte Anbindung des Hinterachsgetriebes sicher stellen zu können. Dies ist insbesondere bei Fahrzeugen mit einer optional angetriebenen Hinterachse nachteilig, da für Fahrzeugvarianten ohne angetriebene Hinterachse der erhöhte Aufwand im Karosseriebau nutzlos verbaut werden muss, was Gewichts- und Kostennachteile bringt. Alternativ kann für derartige Fahrzeugvarianten, bei denen ein Hinterachsgetriebe nicht vorhanden sein muss eine alternative Querträgerkonstruktion eingesetzt werden, was sich jedoch nachteilig auf die Variantenvielfalt im Karosserierohbau auswirkt.

EP 0 812 719 A, DE 10 2005 043 633 A, JP 2000 272 535 A, und DE 875 442 C offenbaren weitere relevante Hinterachsträgern für Kraftfahrzeuge. Aufgabe der Erfindung ist es daher, ein hinterachsträgerloses Kraftfahrzeug mit einem Hinterachsgetriebe und einer Karosserie anzugeben, bei dem die Befestigung und/oder Aufhängung des Hinterachsgetriebes weiter optimiert ist. Insbesondere soll eine montagefreundliche und hinsichtlich der akustischen und fahrdynamischen Anforderungen optimierte Aufhängung eines Hinterachsgetriebes angegeben werden. Weiterhin ist es Aufgabe der Erfindung, eine Möglichkeit für eine Aufhängung eines Hinterachsgetriebes anzugeben, bei der karosserierohbauseitig eine Verminderung der Variantenvielfalt erzielbar ist.
Diese Aufgaben werden mit einem hinterachsträgerlosen Kraftfahrzeug mit den Merkmalen des Anspruchs 1 gelöst. Vorteilhafte Ausführungsformen sind in den Unteransprüchen angegeben.

Ein hinterachsträgerloses Kraftfahrzeug mit einem Hinterachsgetriebe und einer Karosserie und zumindest einer karosserieseitigen Tragstruktur, an der radführende Bauteile ohne Zwischenschaltung eines Hinterachsträgers gelagert sind, wird erfindungsgemäß dadurch weitergebildet, dass das Hinterachsgetriebe unter Zwischenschaltung zumindest eines Schwingungsentkopplungsglieds an der zumindest einen Tragstruktur und/oder an zumindest einem die Tragstrukturen verbindenden Querträger befestigt ist. Die karosserieseitigen Tragstrukturen, an denen ohne Zwischenschaltung eines Hinterachsträgers radführende Bauteile, wie zum Beispiel Lenker, Spurstangen oder der Gleichen gelagert sind und an denen das Hinterachsgetriebe befestigt sind, sind dabei nicht die karosserierohbauseitig vorgesehenen hinteren Karosserielängsträger. In einer bevorzugten Ausführungsform sind solche karosserieseitigen Tragstrukturen gemäß der Erfindung konsolenartige Bauteile, die zwar mit dem karosserierohbauseitig vorgesehenen Längsträger in Verbindung stehen können, oder sich an diesem abstützen. Sie sind jedoch nicht die karosserierohbauseitig vorgesehenen Längsträger selbst. Zweckmäßiger Weise können sie jedoch Teil eines sekundären Lastpfades sein, welcher zusätzlich zu einem ersten, primären Lastpfad zur Einleitung von Heckaufprallkräften in die Karosserie des Fahrzeugs geeignet sind. Üblicherweise sind die karosserierohbauseitig vorgesehenen hinteren Längsträger im Wesentlichen diejenigen Bauteile, welche den ersten (primären) Lastpfad ausbilden. Zweckmäßigerweise verläuft der zweite (sekundäre) Lastpfad im Bereich der Hinterachse eines Fahrzeuges benachbart oder zumindest versetzt zu dem ersten (primären) Lastpfad der Rohbaulängsträger.
Mit der Erfindung gelingt es in einfacher Art und Weise eine einfache, kostengünstige und hinsichtlich der Variantenvielfalt vorteilhafte Hinterachsgetriebeaufhängung zu realisieren, da die Hinterachsgetriebeaufhängung an Tragstrukturen stattfindet, die in jedem Fall achsbauartspezifisch gestaltet und ausgelegt werden müssen, da diese Tragstrukturen zugleich auch die Lagerungsfunktion der radführenden Bauteile der Hinterachse übernehmen.

In der erfindungsgemäßen Ausführungsform ist das Hinterachsgetriebe mittelbar über Aufhängungsträger an der zumindest einer Tragstruktur und/oder dem Querträger, der die Tragstrukturen verbindet befestigt. Das Vorsehen einer mittelbaren über Aufhängungsträger realisierten Aufhängung des Hinterachsgetriebes ermöglicht eine doppelte Schwingungsentkopplung des Hinterachsgetriebes relativ zur Karosserie des Kraftfahrzeuges, da durch das Vorsehen separater Aufhängungsträger eine elastische Kopplung zwischen dem Hinterachsgetriebe, insbesondere dessen Hinterachsgetriebegehäuse, und dem Aufhängungsträger möglich ist.

Demnach ist nach einer besonderen Ausführungsform der Erfindung das Hinterachsgetriebe, insbesondere dessen Hinterachsgetriebegehäuse über erste Schwingungsentkopplungsglieder an dem zumindest einen Aufhängungsträger befestigt, sodass eine elastisch verformbare, insbesondere schwingungsentkoppelte Verbindung zwischen dem Hinterachsgetriebe und dem Aufhängungsträger ermöglicht ist.

Der zumindest eine Aufhängungsträger ist über zweite Schwingungsentkopplungsglieder an der zumindest einen Tragstruktur und/oder dem zumindest einem Querträger befestigt. Hierdurch gelingt es in einfacher Art und Weise, eine doppelte Schwingungsentkopplung des Hinterachsgetriebes bezüglich der Fahrzeugkarosserie sicher zu stellen, ohne dass ein Hinterachsträger vorgesehen werden muss.

Als bevorzugt hat sich herausgestellt, dass sich der zumindest eine Aufhängungsträger bezüglich der Fahrzeugkarosserie in einer Fahrzeugquerrichtung (y-Richtung) erstreckend angeordnet ist. Hierdurch erstreckt sich der Aufhängungsträger mit freien Enden von der Tragstruktur einer ersten Fahrzeugseite zur gegenüberliegenden Tragstruktur einer zweiten Fahrzeugseite, sodass in einfacher Art und Weise ein nahezu symmetrischer Krafteintrag/Lasteintrag in die Karosserie erfolgen kann. Hierdurch wird auch eine große Stützweite zur Abstützung der Reaktionsmomente und Reaktionskräfte, die durch das Hinterachsgetriebe in die Fahrzeugkarosserie eingeleitet werden, erreicht.

In Fahrzeuglängsrichtung (x-Richtung) gesehen ist es bevorzugt, ebenfalls eine möglichst hohe Abstützbasis zu erreichen. Dies gelingt, wenn das Hinterachsgetriebe in einer Fahrzeuglängstrichtung gesehen im Wesentlichen zwischen zwei Aufhängungsträgern angeordnet ist.

Hinsichtlich der Abstützweite in Fahrzeugquerrichtung hat es sich bewährt, dass das Hinterachsgetriebe, insbesondere sich das Hinterachsgetriebegehäuse in einer Fahrzeugquerrichtung gesehen im Wesentlichen zwischen den zweiten Schwingungsentkopplungsgliedern befindet. In anderen Worten bedeutet dies, dass die zweiten Schwingungsentkopplungsglieder das Hinterachsgetriebegehäuse in Fahrzeugquerrichtung bevorzugt überragen.

Bevorzugt ist ebenso, dass in Fahrzeugquerrichtung gesehen ein erster Abstand L₁ zwischen den ersten Schwingungsentkopplungsgliedern eines Aufhängungsträgers kleiner ist als ein zweiter Abstand L₂ zwischen den zweiten Schwingungsentkopplungsgliedern des Aufhängungsträgers, wobei insbesondere bevorzugt ist, dass der erste Abstand L₁ größer als 50% des zweiten Abstands L₂ ist.

In der Fahrzeuglängsrichtung gesehen hat es sich bewährt, dass ein Abstand A zwischen den Aufnahmeträgern größer oder gleich 85% einer Längserstreckung des Hinterachsgetriebes, beziehungsweise des Hinterachsgetriebegehäuses ist.

Zur bauraumsparenden Aufhängung des Hinterachsgetriebes trägt bei, dass der erste Aufhängungsträger bezüglich des Hinterachsgetriebes eingangsseitig angeordnet ist und das Hinterachsgetriebegehäuse im Bereich einer Getriebeeingangswelle umgebend und/oder umfassend ausgebildet ist.

Hinsichtlich der Montage des Hinterachsgetriebes hat sich bewährt, dass die zweiten Schwingungsentkopplungsglieder vormontiert in den Tragstrukturen sitzen und zur Montage des Hinterachsgetriebes mit dem Aufnahmeträger verbindbar, zum Beispiel verschraubbar sind. Diese Maßnahme hat den Vorteil, dass bei den Tragstrukturen, die sowieso eine Vielzahl von Lagerungsstellen für die radführenden Bauteile aufweisen müssen in einfacher Art und Weise auch ein oder mehrere Schwingungsentkopplungsglieder für die Aufhängung des Hinterachsgetriebes integrierbar sind. Zum Befestigen des Hinterachsgetriebes beziehungsweise der Aufhängungsträger hat es sich, aus Sicht der Montagevereinfachung bewährt, dass eine Fügerichtung F₁, zum Beispiel eine Längsachse der zu setzenden Schrauben zum Befestigen der Aufhängungsträger an der zumindest einer Tragstruktur in etwa parallel zu Fahrzeugquerrichtung verläuft oder einen Winkel α von kleiner oder gleich 35° mit dieser einschließt. Eine derartige Anordnung erleichtert die Montage und ermöglicht insbesondere eine gute Zugänglichkeit der Befestigungsmittel, insbesondere der Schrauben von einer Radkastenseite der Karosserie her. Sofern einer der Aufnahmeträger an dem die tragstrukturenverbindenden Querträger befestigt ist, so empfiehlt es sich gegebenenfalls eine Fügerichtung F₂ zur Befestigung der zweiten Schwingungsentkopplungsglieder an dem Querträger parallel zur Fahrzeuglängsrichtung auszurichten oder derart anzuordnen, dass die einen Winkel β von weniger als 35° mit der Fahrzeuglängsrichtung einschließt.

Bevorzugt ist weiterhin, dass die zweiten Schwingungsentkopplungsglieder in den Tragstrukturen oder in dem Querträger vormontiert eingesetzt, insbesondere eingepresst sind und zur Montage des Hinterachsgetriebes die Aufhängungsträger mit den zweiten Schwingungsentkopplungsgliedern verbindbar sind und zu verbinden sind und im Falle einer Demontage des Hinterachsgetriebes aus dem Kraftfahrzeug die zweiten Schwingungsentkopplungsglieder von dem zugehörigen Aufhängungsträgern lösbar trennbar ausgebildet sind und zu trennen sind. Hierbei ist vorteilhaft, dass zum einen eine einfache Montage und Demontage des Hinterachsgetriebes möglich ist. Zum anderen können mit geringem Mehraufwand die Schwingungsentkopplungsglieder in den Tragstrukturen vormontiert, zum Beispiel eingepresst werden, da ohnehin eine Vielzahl von Lagerungen für radführende Bauteile an den Tragstrukturen anzubringen ist.

Des Weiteren ist es vorteilhaft, zumindest die karosserieseitigen Tragstrukturen sowie das Hinterachsgetriebe und die Aufhängungsträger zu einem als Unterbaugruppe vormontierbaren Hinterwagenmodul zusammenzufassen, welches bevorzugt als Ganzes nach Fertigstellung eines Karosserierohbaus starr mit der Karosserie verbindbar, insbesondere unlösbar verbindbar, zum Beispiel verklebt, ist. Diese Maßnahme erscheint vorteilhaft, da das Hinterachsgetriebe keinerlei direkte Verbindungsstelle mit dem Karosserierohbau aufweist und somit in einfacher Art und Weise Teil eines Hinterwagenmoduls sein kann, welches in einem Montageschritt, das heißt nicht in einem Fertigungsschritt während des Karosserierohbaus in das Fahrzeug eingebracht werden kann.

Weiterhin ist es bevorzugt, die Tragstrukturen als Bestandteile eines zusätzlichen, zweiten (sekundären) Lastpfades zur Einleitung von Heckaufprallkräften in die Karosserie auszubilden, wobei der sekundäre Lastpfad bevorzugt, benachbart zu einem ersten (primären) Lastpfad, der durch karosserierohbauseitige hintere Längsträger gebildet wird, angeordnet ist.

Im Folgenden wird die Erfindung anhand der Zeichnung beispielhaft näher erläutert. Es zeigen:
- Figur 1:: Eine perspektivische Unteransicht auf einen Fahrzeugunterboden eines Kraftfahrzeugs gemäß der Erfindung in einer ersten Ausführungsform;
- Figur 2:: Eine vergrößerte Detailansicht auf ein Hinterachsgetriebe zusammen mit Aufhängungsträgern eines erfindungsgemäßen Kraftfahrzeugs in perspektivischer Ansicht;
- Figur 3:: Eine weiter detaillierte perspektivische Ansicht auf die Aufhängungsträger gemäß Figur 2;
- Figur 4:: Eine perspektivische Unterbodenansicht auf ein erfindungsgemäßes Kraftfahrzeug in einer zweiten Ausführungsform;
- Figur 5:: Eine perspektivische Detailansicht auf ein Hinterachsgetriebe zusammen mit Aufhängungsträgern und Schwingungsentkopplungselementen der zweiten Ausführungsform gemäß Figur 4;
- Figur 6:: Eine weiter detaillierte Ansicht auf Aufhängungsträger gemäß der Ausführungsform nach Figur 5.

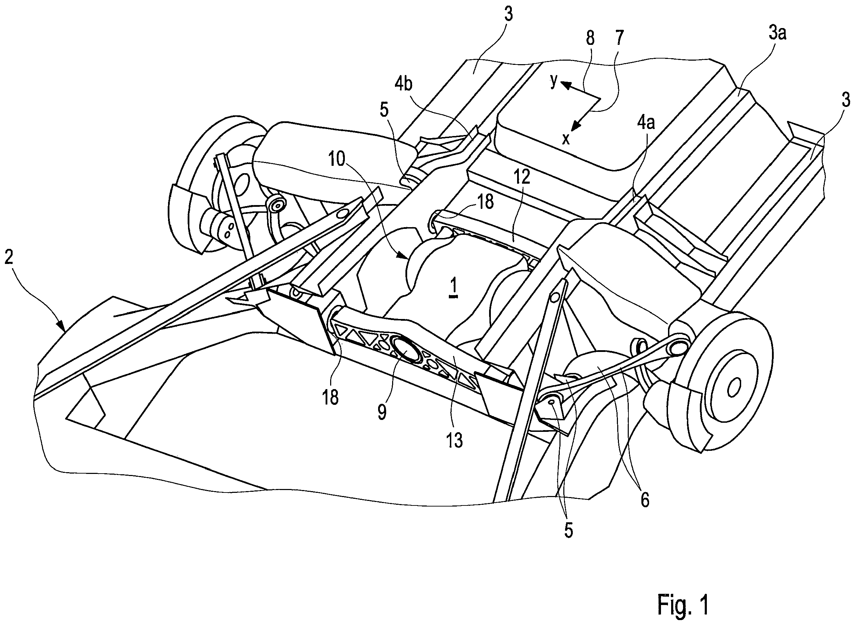

Figur 1 zeigt eine erste Ausführungsform eines hinterachsträgerlosen Kraftfahrzeugs gemäß der Erfindung. Das Kraftfahrzeug besitzt ein Hinterachsgetriebe 1 und eine Karosserie 2. Die Karosserie 2 besitzt karosserierohbauseitig vorgesehene hintere Längsträger 3 und karosseriefeste Tragstrukturen 4a, 4b. Die Tragstrukturen 4a, 4b sind konsolenartig aufgebaut und sind starr mit der Karosserie 2 verbunden. Die Tragstrukturen 4a, 4b weisen eine Vielzahl von Lagerungsstellen 5 für radführende Bauteile, zum Beispiel Lenker 6 eines Rades (nicht gezeigt) einer Hinterachse des Kraftfahrzeuges auf. Eine Fahrzeuglängsrichtung (x-Richtung) ist mit dem Bezugszeichen 7 gekennzeichnet wobei die x-Richtung 7 durch den Pfeil in der Figur 1 in die Vorwärtsfahrtrichtung des Kraftfahrzeuges weist. Mit 8 ist eine y-Richtung (Fahrzeugquerrichtung) angegeben.

Das Hinterachsgetriebe 1 besitzt einen Getriebeeingang 9, der mit einer Kardanwelle (nicht gezeigt) verbunden ist. Wie üblich sind Getriebeausgänge 10 vorhanden, von denen Antriebswellen (nicht gezeigt) zu Hinterrädern des Kraftfahrzeuges abgehen.

In x-Richtung 7 gesehen sind die Tragstrukturen 4a, 4b im Bereich des Getriebeeingangs 9 mit einem Querträger 11 verbunden.

Am Hinterachsgetriebe 1 ist an dessen in x-Richtung 7 gesehen hinterem Ende ein erster Aufhängungsträger 12 befestigt. In x-Richtung 7 gesehen am vorderen Ende im Bereich des Getriebeeingangs 9 ist am Hinterachsgetriebe 1, insbesondere den Getriebeeingang 9 umfassend ein zweiter Aufhängungsträger 13 angeordnet. Die Aufhängungsträger 12, 13 erstrecken sich bezüglich des Kraftfahrzeugs im Wesentlichen in y-Richtung 8.

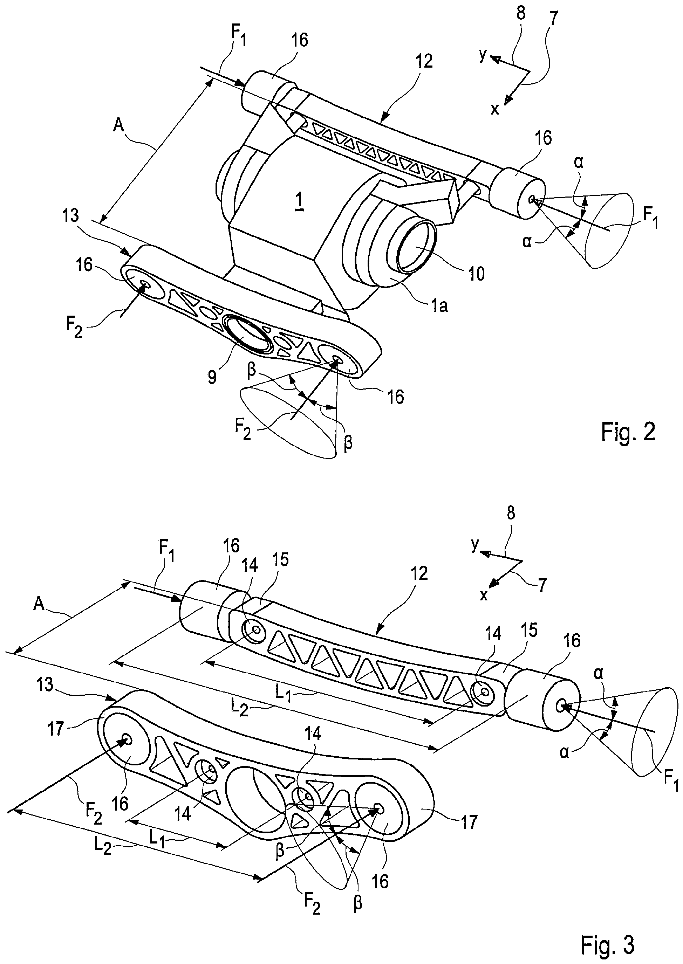

Der erste Aufhängungsträger 12 (vergleiche Figur 2,3) besitzt erste Schwingungsentkopplungsglieder 14 und ist über diese mit dem Getriebegehäuse 3a des Hinterachsgetriebes 3 verbunden. Im Bereich freier Enden 15 des ersten Aufhängungsträgers 12 wirkt der Aufhängungsträger 12 mit zweiten Schwingungsentkopplungsgliedern 16 zusammen. Die zweiten Schwingungsentkopplungsglieder 16 sitzen in geeigneten Ausnehmungen der Tragstrukturen 4a, 4b und sind bevorzugt dort vormontiert, zum Beispiel eingepresst. Zur Verbindung des ersten Aufhängungsträgers 12 mit den zweiten Schwingungsentkopplungsgliedern 16 sind beispielsweise entlang der Fügerichtung F₁ Schrauben einsetzbar, sodass die zweiten Schwingungsentkopplungsglieder 16 mit dem ersten Aufhängungsträger 12 lösbar verbindbar sind. Die Fügerichtung F₁ ist bevorzugt in etwa parallel zur y-Richtung 8 ausgerichtet oder kann mit ihr einen Winkel α von bevorzugt kleiner oder gleich 35° einschließen.

Der zweite Aufhängungsträger 13 besitzt ebenfalls erste Schwingungsentkopplungsglieder 14 über die er schwingungsentkoppelt mit dem Getriebegehäuse 1a des Hinterachsgetriebes 3 verbunden ist. Im Bereich freier Enden 17 des zweiten Aufhängungsträgers 13 besitzt dieser Aufnahmeaugen zur Aufnahme der zweiten Schwingungsentkopplungsglieder 16. Die zweiten Schwingungsentkopplungsglieder 16 des zweiten Aufhängungsträgers 13 sind bevorzugt in einer Fügerichtung F₂ mittels einer Schraube oder dergleichen Befestigungsmittel am Querträger 11 befestigbar. Die Fügerichtung F₂ verläuft bevorzugt parallel zu x-Richtung 7 des Kraftfahrzeugs. Sie kann mit ihr bevorzugt einen Winkel β bis zu 35° einschließen.

In Fahrzeugquerrichtung (y-Richtung 8) besitzen die ersten Schwingungsentkopplungsglieder 14 zueinander einen Abstand L₁. Ein Wirkabstand zwischen zweiten Schwingungsentkopplungsglieder 16 eines Aufnahmeträgers 12,13 wird als Abstand L₂ bezeichnet. Der Abstand L₁ ist kleiner als der Abstand L₂. Bevorzugt ist der erste Abstand L₁ größer als 50% des zweiten Abstands L₂.

Die Aufhängungsträger 12,13 sind in Fahrzeuglängsrichtung (x-Richtung) derart beanstandet angeordnet, dass sich das Getriebegehäuse 1a in Fahrzeuglängsrichtung (x-Richtung 7) gesehen im Wesentlichen zwischen den Aufhängungsträgern 12,13 befindet. Dies stellt eine gute Abstützbasis für abzustützende Reaktionsmomente um die Fahrzeugquerachse (y-Richtung) dar. Der Abstand L₁ der zweiten Schwingungsentkopplungsglieder 16 ist möglichst groß gewählt, bevorzugt größer als die Breite des Getriebegehäuses 1a in y-Richtung 8 gesehen. Dies ermöglicht geringe Abstützungskräfte/Reaktionskräfte in den Tragstrukturen 4a, 4b.

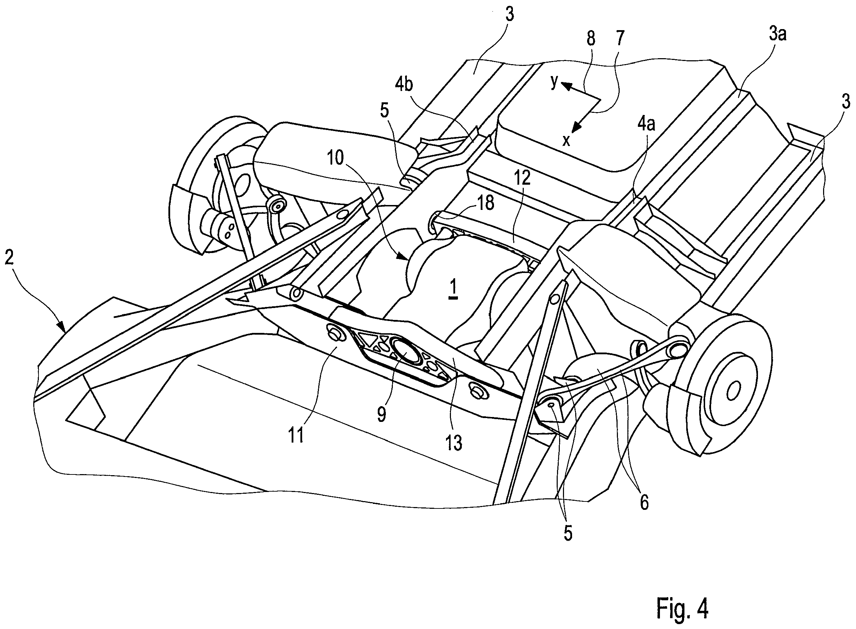

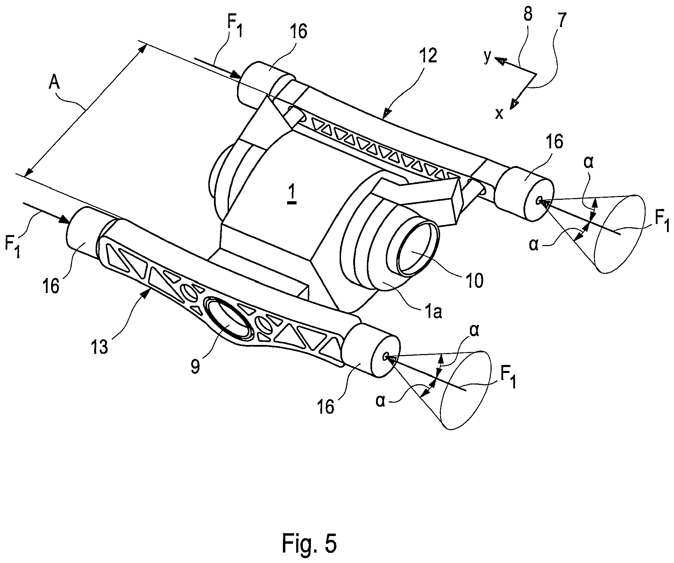

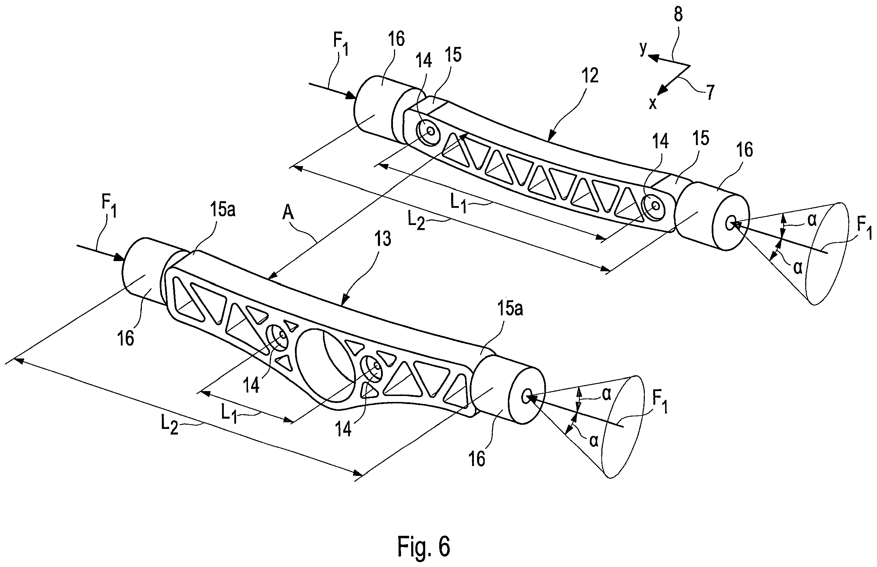

Eine zweite Ausführungsform der Erfindung ist in den Figuren 4 bis 6 dargestellt. Diese Ausführungsform unterscheidet sich lediglich dadurch von der ersten Ausführungsform gemäß den Figuren 1 bis 3, dass kein Querträger 11 vorhanden ist, der die Tragstrukturen 4a, 4b getriebeeingangsseitig miteinander verbindet. Als Konsequenz hieraus ist der zweite Aufhängungsträger 13 vergleichbar zum ersten Aufhängungsträger 12 aufgebaut und wirkt an seinen freien Enden 15a mit zweiten Schwingungsentkopplungsgliedern 16 zusammen, welche in Öffnungen 18 der Tragstrukturen 4a, 4b vormontiert sitzen, zusammen. Bei dieser Ausführungsform ist von besonderem Vorteil, dass sämtliche freien Enden 15, 15a des ersten Aufhängungsträgers 12 und des zweiten Aufhängungsträgers 13 der in Fügerichtung F₁ mit den Tragstrukturen 4a, 4b verbindbar sind. Diese Fügestellen sind somit gut vom Radkasten des Kraftfahrzeugs aus erreichbar.

Im Übrigen entspricht die Ausführungsform gemäß der Figuren 4 bis 6 der vorbeschriebenen Aüsführungsform gemäß den Figuren 1 bis 3, sodass gleiche Bestandteile mit gleichen Bezugszeichen versehen sind. Im Übrigen sind die im Zusammenhang mit den Figuren 1 bis 3 beschriebenen Merkmale und Eigenschaften selbstverständlich ohne weiteres auf das Ausführungsbeispiel gemäß den Figuren 4 bis 6 übertragbar.

Die Erfindung zeigt einen Weg auf, eine weitgehende Funktionsintegration in den Tragstrukturen 4a, 4b zu verwirklichen. Zum einen sind - wie bereits aus dem Stand der Technik bekannt - die Tragstrukturen 4a, 4b als lagernde Aufnahmeeinrichtungen für radführende Bauteile, wie zum Beispiel Lenker, Spurstangen oder Stabilisatoren oder der Gleichen ausgebildet. Zugleich können die Tragstrukturen nunmehr gemäß der Erfindung als karosserieseitige Befestigungsstrukturen zur Aufhängung eines Hinterachsgetriebes 1 dienen. In weiterer vorteilhafter Ausgestaltungsform können die Tragstrukturen 4a, 4b, die starr mit der Rohbaukarosserie verbunden sind, Teil eines zweiten Lastpfades sein, der zusätzlich zu einem ersten (primären) Lastpfad, der üblicherweise durch die hinteren Längsträger 3 gebildet wird, vorgesehen ist. Somit gelingt es, die Tragstrukturen 4a, 4b einerseits als wesentliche karosserieseitige Radaufhängungseinrichtungen zu nutzen und zudem positive Auswirkungen auf das Crashverhalten eines Hinterwagens eines erfindungsgemäßen Kraftfahrzeugs zu erreichen. Des Weiteren ermöglicht es eine erfindungsgemäße Ausgestaltung in einfacher Art und Weise, die Tragstrukturen 4a, 4b sowie zumindest das Hinterachsgetriebe 1 und die Aufhängungsträger 12,13 zusammen mit den erforderlichen Schwingungsentkopplungsgliedern 14,16 als vormontierbares Hinterachsmodul auszugestalten, welches zusammen mit sekundären Längsträgern 3a ein sekundäres Lastpfad ausbildendes Hinterwagenmodul bilden kann. Ein solches Hinterwagenmodul ist gut vormontierbar und in einen standardisierten Karosserierohbau einbringbar, wobei eine Vielzahl von unterschiedlichen Fahrzeugvarianten, zum Beispiel eine Unterscheidung zwischen Fahrzeugen mit angetriebener Hinterachse und Fahrzeugen mit nicht angetriebener Hinterachse innerhalb des Hinterwagenmoduls umgesetzt werden kann und somit eine Variantenvielfalt vom Karosserierohbau abgehalten werden kann.

### Bezugszeichenliste

- A: (Abstand)
- L₁: erster Abstand
- L₂: zweiter Abstand
- α: Winkel
- β: Winkel
- F₁: Fügerichtung
- F₂: Fügerichtung

- 1: Hinterachsgetriebe
- 1a: Hinterachsgetriebegehäuse
- 2: Karosserie
- 3: Längsträger
- 3a: sekundärer Längsträger
- 4a: Tragstruktur
- 4b: Tragstruktur
- 5: Lagerungsstelle
- 6: Lenker
- 7: x-Richtung; Fahrzeuglängsrichtung
- 8: y-Richtung; Fahrzeugquerrichtung
- 9: Getriebeeingang
- 10: Getriebeausgang
- 11: Querträger
- 12: erster Aufhängungsträger
- 13: zweiter Aufhängungsträger
- 14: erste Schwingungsentkopplungsglieder
- 15: freie Enden
- 15a: freies Ende
- 16: zweite Schwingungsentkopplungsglieder
- 17: freie Enden
- 18: Öffnungen

## Patentansprüche

1. Hinterachsträgerloses Kraftfahrzeug mit einem Hinterachsgetriebe (1) und einer Karosserie (2) und zumindest einer karosserieseitigen Tragstruktur (4a, 4b) an der ohne Zwischenschaltung eines Hinterachsträgers radführende Bauteile (5, 6) gelagert sind, wobei
das Hinterachsgetriebe (1) unter Zwischenschaltung zumindest eines Schwingungsentkopplungsglieds (14, 16) mittelbar über zumindest einen Aufhängungsträger (12, 13) an der zumindest einen Tragstruktur (4a, 4b) und/oder zumindest einem die Tragstrukturen (4a, 4b) verbindenden Querträger (11) befestigt ist, wobei der zumindest eine Aufhängungsträger (12, 13) über Schwingungsentkopplungsglieder (16) an der zumindest einen Tragstruktur (4a, 4b) und/oder dem zumindest einen Querträger (11) befestigt ist, **dadurch gekennzeichnet, dass** eine Fügerichtung (F₁) zum Befestigen der Aufhängungsträger (12, 13) an der zumindest einen Tragstruktur (4a, 4b), in der die zweiten Schwingungsentkopplungsglieder (16) vormontiert sitzen, parallel zur Fahrzeugquerrichtung (Y-Richtung) verläuft oder einen Winkel (α) von kleiner oder gleich 35° mit dieser einschließt.

2. Kraftfahrzeug nach Anspruch 1, **dadurch gekennzeichnet, dass** das Hinterachsgetriebe (1) über erste Schwingungsentkopplungsglieder (14) an dem zumindest einen Aufhängungsträger (12, 13) befestigt ist.

3. Kraftfahrzeug nach Anspruch 1 oder 2, **dadurch gekennzeichnet, dass** der zumindest eine Aufhängungsträger (12, 13) bezüglich der Fahrzeugkarosserie (2) sich in einer Fahrzeugquerrichtung erstreckend angeordnet ist.

4. Kraftfahrzeug nach einem der vorangegangenen Ansprüche, **dadurch gekennzeichnet, dass** das Hinterachsgetriebe (3) in einer Fahrzeuglängsrichtung (7) gesehen im Wesentlichen zwischen zwei Aufhängungsträgern (12, 13) angeordnet ist.

5. Kraftfahrzeug nach einem der vorangegangenen Ansprüche, **dadurch gekennzeichnet, dass** das Hinterachsgetriebe (1) in einer Fahrzeugquerrichtung (8) gesehen im Wesentlichen zwischen den zweiten Schwingungsentkopplungsgliedern (14, 16) angeordnet ist.

6. Kraftfahrzeug nach einem der vorangegangenen Ansprüche, **dadurch gekennzeichnet, dass** in Fahrzeugquerrichtung (8) gesehen ein erster Abstand (L₁) zwischen den ersten Schwingungsentkopplungsgliedern (14) eines Aufhängungsträgers (12, 13) kleiner ist als ein zweiter Abstand (L₂) zwischen den zweiten Schwingungsentkopplungsgliedern (16) des Aufhängungsträgers (12, 13) ist.

7. Kraftfahrzeug nach einem der vorangegangenen Ansprüche, **dadurch gekennzeichnet, dass** der erste Abstand (L₁) größer als 50 % des zweiten Abstands (L₂) ist.

8. Kraftfahrzeug nach einem der vorangegangenen Ansprüche, **dadurch gekennzeichnet, dass** der erste Aufhängungsträger (12) hinterachsgetriebeeingangsseitig angeordnet ist und ein Hinterachsgetriebegehäuse (1a) im Bereich einer Getriebeeingangswelle umgebend/umfassend ausgebildet ist.

9. Kraftfahrzeug nach einem der vorangegangenen Ansprüche, **dadurch gekennzeichnet, dass** die zweiten Schwingungsentkopplungsglieder (16) vormontiert in der Tragstruktur (4a, 4b) sitzen und zur Montage des Hinterachsgetriebes (1) mit dem Aufnahmeträger (12, 13) verbindbar sind.

10. Kraftfahrzeug nach einem der vorangegangenen Ansprüche, **dadurch gekennzeichnet, dass** eine Fügerichtung (F₂) zur Befestigung der zweiten Schwingungsentkopplungsglieder (16) an einen Aufhängungsträger (12,13) parallel zur Fahrzeuglängsrichtung verläuft oder zu dieser einen Winkel (β) von 35° oder weniger einschließt.

11. Kraftfahrzeug nach einem der vorangegangenen Ansprüche, **dadurch gekennzeichnet, dass** die zweiten Schwingungsentkopplungsglieder (16) in den Tragstrukturen (4a, 4b) oder dem Querträger (11) vormontiert eingesetzt, insbesondere eingepresst sind, und zur Montage des Hinterachsgetriebes (1) die Aufhängungsträger(12, 13) mit den zweiten Schwingungsentkopplungsgliedern verbindbar und zu verbinden sind und im Falle einer Demontage des Hinterachsgetriebes (1) aus dem Kraftfahrzeug die zweiten Schwingungsentkopplungsglieder (16) von den zugehörigen Aufhängungsträgern (12, 13) lösbar/trennbar ausgebildet sind und zu trennen sind.

12. Kraftfahrzeug nach einem der vorrangegangenen Ansprüche, **dadurch gekennzeichnet, dass** zumindest die karosserieseitigen Tragstrukturen (4a, 4b) sowie das Hinterachsgetriebe (1), die Aufhängungsträger (12, 13) Bestandteile eines als Unterbaugruppe vormontierbaren Hinterwagenmoduls sind, welches nach Fertigstellung eines Karosserierohbaus der Karosserie (2) starr mit der Karosserie (2) verbindbar, insbesondere unlösbar verbindbar ist.

13. Kraftfahrzeug nach einem der vorrangegangenen Ansprüche, **dadurch gekennzeichnet, dass** die Karosserie (2) hintere, einen ersten (primären) Lastpfad zur Einleitung von Heckaufprallkräften in die Karosserie (2) bildende Längsträger (3) aufweist und die zumindest eine Tragstruktur (4a, 4b) Teil eines zusätzlichen zweiten (sekundären) Lastpfades zur Einleitung von Heckaufprallkräften in die Karosserie (2) ist.

## Claims

1. Motor vehicle without a rear axle carrier with a rear axle transmission (1) and a body (2) and at least one body-side support structure (4a, 4b) at which wheel guiding components (5, 6) are mounted without the interposition of a rear axle carrier, wherein
the rear axle transmission (1) is fastened, with the interposition of at least one vibration decoupling link (14, 16), indirectly via at least one suspension support (12, 13) to the at least one support structure (4a, 4b) and/or at least one of the crossmembers (11) connecting the support structures (4a, 4b), wherein the at least one suspension support (12, 13) is fastened via vibration decoupling links (16) to the at least one support structure (4a, 4b) and/or the at least one crossmember (11), **characterised in that** one joining direction (F₁) for fastening the suspension support (12, 13) to the least one support structure (4a, 4b), in which the second vibration decoupling links (16) sit pre-mounted, extends parallel to the vehicle transverse direction (Y-direction) or forms an angle (α) of less than or equal to 35° with it.

2. Motor vehicle according to claim 1, **characterised in that** the rear axle transmission (1) is fastened to the at least one suspension support (12, 13) via first vibration decoupling links (14).

3. Motor vehicle according to claim 1 or 2, **characterised in that** the one suspension support (12, 13) is disposed extending in a vehicle transverse direction with respect to the vehicle body (2).

4. Motor vehicle according to one of the preceding claims, **characterised in that** the rear axle transmission (3) viewed in a vehicle longitudinal direction (7) is disposed substantially between two suspension supports (12, 13).

5. Motor vehicle according to one of the preceding claims, **characterised in that** the rear axle transmission (1) viewed in a vehicle transverse direction (8) is disposed substantially between the second vibration decoupling links (14, 16).

6. Motor vehicle according to one of the preceding claims, **characterised in that** viewed in vehicle transverse direction (8) a first distance (L₁) between the first vibration decoupling links (14) of a suspension support (12, 13) is smaller than a second distance (L₂) between the second vibration decoupling links (16) of the suspension support (12, 13).

7. Motor vehicle according to one of the preceding claims, **characterised in that** the first distance (L₁) is greater than 50 % of the second distance (L₂).

8. Motor vehicle according to one of the preceding claims, **characterised in that** the first suspension support (12) is disposed on the entry side of the rear axle transmission and a rear axle transmission housing (1a) is formed surroundingly/includingly in the region of a transmission input shaft.

9. Motor vehicle according to one of the preceding claims, **characterised in that** the second vibration decoupling links (16) sit premounted in the support structure (4a, 4b) and for installation of the rear axle transmission (1) can be connected with the receiving carrier (12, 13).

10. Motor vehicle according to one of the preceding claims, **characterised in that** one joining direction (F₂) for fastening the second vibration decoupling links (16) to a suspension support (12, 13) extends parallel to the vehicle longitudinal direction or forms an angle (β) of 35° or less with it.

11. Motor vehicle according to one of the preceding claims, **characterised in that** the second vibration decoupling links (16) are installed premounted in the support structures (4a, 4b) or in the crossmember (11), in particular pressed in, and for installation of the rear axle transmission (1) the suspension supports (12, 13) can be and should be connected with the second vibration decoupling links and in the case of a deinstallation of the rear axle transmission (1) out of the motor vehicle the second vibration decoupling links (16) are formed in a releasable/separable manner out of the suspension supports (12, 13) belonging thereto and are to be separated therefrom.

12. Motor vehicle according to one of the preceding claims, **characterised in that** at least the support structures (4a, 4b) on the bodyside and the rear axle transmission (1), the suspension supports (12, 13) are components of a car rear module which can be premounted as a subassembly, said car rear module being rigidly connectable with the body (2), in particular non-releasably connectable, after the completion of a body shell of the body (2).

13. Motor vehicle according to one of the preceding claims, **characterised in that** the body (2) has rearward longitudinal supports (3) which form a first (primary) load path for guiding rear impact forces into the body (2), and the at least one support structure (4a, 4b) is part of an additional second (secondary) load path for guiding rear impact forces into the body (2).

## Revendications

1. Véhicule automobile sans support de pont arrière avec une transmission d'essieu arrière (1) et avec une carrosserie (2) et au moins une structure porteuse (4a, 4b) côté carrosserie, au niveau de laquelle sont logées des pièces (5, 6) guidant les roues sans support d'essieu arrière intercalé,
dans lequel la transmission d'essieu arrière (1) est fixée, avec au moins un élément de découplage d'oscillation (14, 16) intercalé, indirectement par l'intermédiaire d'au moins un support de suspension (12, 13) à l'au moins une structure porteuse (4a, 4b) et/ou à au moins une poutre transversale (11) reliant les structures porteuses (4a, 4b),
dans lequel l'au moins un support de suspension (12, 13) est fixé par l'intermédiaire d'éléments de découplage d'oscillation (16) à l'au moins une structure porteuse (4a, 4b) et/ou à l'au moins une poutre transversale (11),
**caractérisé en ce qu'**une direction de jonction (F₁) pour la fixation du support de suspension (12, 13) à l'au moins une structure porteuse (4a, 4b) dans laquelle sont prémontés les seconds éléments de découplage d'oscillation (16) s'étend parallèlement à la direction transversale de véhicule (direction Y) ou forme avec celle-ci un angle (α) inférieur ou égal à 35°.

2. Véhicule automobile selon la revendication 1, **caractérisé en ce que** la transmission d'essieu arrière (1) est fixée par l'intermédiaire de premiers éléments de découplage d'oscillation (14) à l'au moins un support de suspension (12, 13).

3. Véhicule automobile selon la revendication 1 ou 2, **caractérisé en ce que** l'au moins un support de suspension (12, 13) est agencé par rapport à la carrosserie de véhicule (2) de manière à s'étendre dans une direction transversale de véhicule.

4. Véhicule automobile selon l'une quelconque des revendications précédentes,
**caractérisé en ce que** la transmission d'essieu arrière (3) est agencée, vue dans une direction transversale de véhicule (7), globalement entre deux supports de suspension (12, 13).

5. Véhicule automobile selon l'une quelconque des revendications précédentes,
**caractérisé en ce que** la transmission d'essieu arrière (1) est agencée, vue dans une direction transversale de véhicule (8), globalement entre les deux éléments de découplage d'oscillation (14, 16).

6. Véhicule automobile selon l'une quelconque des revendications précédentes,
**caractérisé en ce que**, vue dans la direction transversale de véhicule (8), une première distance (L₁) entre les premiers éléments de découplage d'oscillation (14) d'un support de suspension (12,13) est inférieure à une seconde distance (L₂) entre les seconds éléments de découplage d'oscillation (16) du support de suspension (12, 13).

7. Véhicule automobile selon l'une quelconque des revendications précédentes,
**caractérisé en ce que** la première distance (L₁) est supérieure à 50% de la seconde distance (L₂).

8. Véhicule automobile selon l'une quelconque des revendications précédentes,
**caractérisé en ce que** le premier support de suspension (12) est agencé côté entrée de la transmission d'essieu arrière et un carter de transmission d'essieu arrière (1a) est réalisé dans la zone d'un arbre d'entrée de transmission de manière à l'entourer/envelopper.

9. Véhicule automobile selon l'une quelconque des revendications précédentes,
**caractérisé en ce que** les seconds éléments de découplage d'oscillation (16) sont prémontés dans la structure porteuse (4a, 4b) et peuvent être reliés au support de suspension (12, 13) pour le montage de la transmission d'essieu arrière (1).

10. Véhicule automobile selon l'une quelconque des revendications précédentes,
**caractérisé en ce qu'**une direction de jonction (F₂) pour la fixation des seconds éléments de découplage d'oscillation (16) à un support de suspension (12,13) s'étend parallèlement à la direction longitudinale de véhicule ou forme avec celle-ci un angle (β) inférieur ou égal à 35°.

11. Véhicule automobile selon l'une quelconque des revendications précédentes,
**caractérisé en ce que** les seconds éléments de découplage d'oscillation (16) sont prémontés dans les structures porteuses (4a, 4b) ou dans la poutre transversale (11), en particulier enfoncés en force, et, pour le montage de la transmission d'essieu arrière (1), les supports de transmission (12,13) peuvent et doivent être reliés aux seconds éléments de découplage d'oscillation et, dans le cas d'un démontage de la transmission d'essieu arrière (1) hors du véhicule automobile, les seconds éléments de découplage d'oscillation (16) sont réalisés de manière à pouvoir être détachés/séparés des supports de suspension (12, 13) associés et doivent être séparés de ceux-ci.

12. Véhicule automobile selon l'une quelconque des revendications précédentes,
**caractérisé en ce qu'**au moins les structures porteuses côté carrosserie (4a, 4b) ainsi que la transmission d'essieu arrière (1) et les supports de suspension (12, 13) font partie d'un module de train arrière pouvant être prémonté en tant que module de châssis qui, après la fabrication d'une coque de la carrosserie (2), peut être assemblé rigidement, en particulier de façon inamovible, à la carrosserie (2).

13. Véhicule automobile selon l'une quelconque des revendications précédentes,
**caractérisé en ce que** la carrosserie (2) comporte des poutres longitudinales (3) arrière formant une première voie de charge (primaire) pour l'introduction de forces de collision arrière dans la carrosserie (2) et l'au moins une structure porteuse (4a, 4b) fait partie d'une seconde voie de charge (secondaire) pour l'introduction de forces de collision arrière dans la carrosserie (2).
